# EUROPEAN PATENT SPECIFICATION

(11) **EP 1 863 982 B1**
(45) Date of publication and mention of the grant of the patent: **19.05.2010**
(21) Application number: 06728488.5
(22) Date of filing: 15.03.2006
(51) Int. Cl.: E04B 2/74, F16B 5/00

(54) **MODULAR WALL**
MODULARE WAND
MUR MODULAIRE

(30) Priority: 16.03.2005 IT RA20050010
(43) Date of publication of application: 12.12.2007
(73) Proprietor: ERRETI S.r.l., 48010 Bagnara di Romagna (Ravenna) (IT)
(72) Inventor: AVVANZINI, Ugo, I-48010 Bagnara di Romagna (RA) (IT)
(74) Representative: Regnault de la Mothe, Hélène
(86) International application number: PCT/IT2006/000156
(87) International publication number: WO 2006/097963

(56) References cited:
- WO-A-97/39201
- DE-A1- 19 529 870
- FR-A- 2 699 234
- FR-A- 2 839 737

## Description

The present invention relates to a wall comprising a plurality of panels coupled with one another two by two. In particular, the present invention relates to a wall comprising a plurality of panels coupled together two by two by means of gripping members of the mechanically loosenable type. More in detail, the present invention relates to a wall comprising a plurality of panels coupled together two by two by means of gripping and stiffening members of a mechanically loosenable type.

### BACKGROUND OF THE INVENTION

In the sector of modular walls there are many known solutions for mechanically coupling panels together. A discussion of the more interesting state-of-the-art solutions for coupling panels mechanically follows. With reference to the case PCT WO0056589, teachings are provided for coupling two panels through coupling members that enable the respective panels to be orientated on one another by an angle that is settable at will inside a set range, which depends on the peripheral extent of a coupling element. The panels connected together by the coupling members are box panels. This document, '589, is not the first in which joint means with an adjustable angle size is disclosed. In fact, teachings that are useful for making a modular wall shaped like a broken line are available in patent application WO97/39201 where a tubular post is disclosed that is suitable, in use, to hinge two adjacent panels in an angularly adjustable manner. In particular, any tubular post comprises a first and a second elongated post elements each one of which presents at least a radially extending mounting engagement to couple with a respective panel, and a respective substantially C-shaped transversal section provided with two angularly extending coupling portions designed to overlap with corresponding coupling portions of the respective first/second post element. In this way, the two elements which constitute the tubular post are able to rotate reciprocally in a substantially coaxial manner in order to adjust the angular position of the respective supported panels. In addiction, for each first/second post element, an outer surface of at least one angularly extending portion presents a serrated profile provided with a plurality of longitudinal grooves which are selectively engageable by a respective inner surface of a coupling portion of the respective second/first element, by means of a respective abutment member, in order to block the relative angular positions of the two coupled post element. However, any of these engagements between a grove and a respective abutment member is almost unstable and does not allow a reliable solution to block the relative angular positions of two respective adjacent panels.

Similarly, the document FR2708054 discloses a modular wall comprising a plurality of adjacent aluminium panels hinged each other by means of respective articulated joint. In particular, any one of these joints comprises two identical elements, each one of which is provided with a longitudinal panel mounting seat and a concave coupling portion placed opposite to this mounting seat and shaped to match with the coupling portion of a respective identical element. In particular any coupling portion presents a C-shaped throat presenting a first end that carry rigidly a respective pivoting half-head, and a second end shaped as a finger. In use, any finger of a coupling portion slides about the pivoting half-head of a respective further coupling portion in such a way that the two elements are able to rotate reciprocally in a substantially coaxial manner. In addition, a central pivot is stably inserted between the two half-heads in order to give stability to the articulated coupling. However, although stable and robust, this joint according to document FR2708054 does not comprise a blocking device to fix the relative angular positions of the panels.

Alternatively, teachings for making a modular wall shaped like a broken line are available also in the patent GB1288454, in which panels of box type are disclosed, each of which has opposite plates; the panels are coupled together by a joint shaped so as to enable the reciprocal rotation of two panels coupled together through elements provided by spoked coupling elements. In the case of patent CA2233826 the coupling between the panels is obtained through the interposition of a joint with which the panels are coupled in a substantially telescopic manner. Accordingly, at least in principle, two panels coupled together are free to run on one another longitudinally and to jeopardise the stability of the structure if the panels have a reduced width with respect to the longitudinal extent.

Recently, in the sector of modular walls comprising panels of reduced width, a particular type of coupling between panels has been studied, a diagram of which is shown in figure A attached to this disclosure. According to this coupling diagram, a coupling portion of a first panel comprises a circular portion furrowed internally in a central position by a longitudinal groove. The second panel has a coupling panel that has by analogy the shape of an anchor provided with a stock. In the analogy of the anchor the coupling panel of the second panel has a rib located at the end of the trunk that is suitable for engaging the aforementioned grooving and peaks of the anchor enable coupling with the ends of the circular portion of the first panel. Caps are furthermore provided for the ends that are shaped to contain within themselves the part that centrally cuts the circular portion and carries the rib. The mounting of the two coupling portions is through a snap connection, but the coupling seal is limited in the body of the wall if transverse force of even a small amount is applied, with the result that the wall opens to full width. Furthermore, sliding between the panels coupled by this type of coupling is half stable, it being incapable of supporting loads acting sideways, to which it yields through sliding of a panel on one another. On the other hand, it is possible that the aforementioned solution is stable only in some set loading/use conditions because in the design phase a very slim structure without screw connections was chosen that not only places aesthetic constraints but also increases the weight of the wall. These drawbacks could be of secondary importance in modular walls that have to be left in position for long times but they are of greater importance if the modular wall has to be used in temporary installations like those of extemporaneous exhibitions of short duration, the so-called "road shows", which may also be held in open environments, characterised by a great number of visitors in a short time and which are therefore often characterised by great movement. On the other hand, in the case of permanent or semi-permanent installations if the setting is open-air, the use of threaded connections coupling materials of different type may cause rapid deterioration of the metal positioned further down in the electrochemical series. In the case of a coupling in which the panels are made of aluminium or relative alloys and the connecting screws are made of iron or steel material the aluminium of the panels may be damaged, compromising the durability of the panels, which are decidedly the most costly coupling component.

For the reasons disclosed above, the problems of fix the relative angular positions and maximize the side stability of adjacent panels in a modular walls made of extruded material are not solved in a satisfactory manner and represent an interesting challenge for the applicant who has set himself the objective of providing a technical solution that is suitable to couple stably and in a selectively releasable manner adjacent panels in modular walls in order to increase the side stability and stably fix the angular positions of these panels. In addition, this solution is also easily installable and almost inexpensive. In consideration of what has been disclosed above, it would be desirable to have a modular wall comprising a plurality of panels made of extruded material that by overcoming the drawbacks illustrated above that are typical of the prior art would set a new standard for such types of product.

### SUMMARY OF THE PRESENT INVENTION

The present invention relates to a wall comprising a plurality of panels coupled with one another two by two. In particular, the present invention relates to a wall comprising a plurality of panels coupled together two by two by means of gripping members of a mechanically loosenable type. More in detail, the present invention relates to a wall comprising a plurality of panels coupled together two by two by means of gripping and stiffening members of a mechanically loosenable type.

The object of the present invention is to make a modular wall that enables the drawbacks illustrated above to be overcome and which is suitable for meeting a set of needs that at the current time have not yet been solved and are therefore suitable for constituting a new and original source of economic interest that is able to modify the current modular wall market.

According to the present invention a modular wall is made, the main features of which will be disclosed in at one the claims that follow.

The present invention furthermore refers to a locking member for panels of a modular wall that are adjacent to one another.

According to the present invention a locking member is furthermore made for panels of a modular wall that are adjacent to one another, that is particularly valid because of the practicality and capacity to increase the rigidity to lateral loads of the wall as a whole, and the multiplicity of advantages offered by this connecting member. These include, in addition to the decisively low cost, the possibility of acting as a wall support, supporting elements displaying information to be made public, being easily assemblable and dismantleable without the need to use particular tools, and being free of problems of oxidation of the aluminium.

Furthermore, the present invention relates to a method for mounting and installing a modular wall.

According to the present invention a rapid and efficient method is furthermore provided for the mounting and installation of a modular wall made according to the present invention.

### BRIEF DESCRIPTION OF THE DRAWINGS

Further features and advantages of the modular wall according to the present invention will become clearer from the following disclosure, shown with reference to the attached figures that illustrate at least an embodiment thereof by way of non-limitative example in which identical or corresponding parts of the device are identified by the same reference numbers. In particular:
- Fig. A is a schematic plan view and with parts removed for clarity of a coupling portion of a known wall;
- Fig. 1 is a schematic front view with parts removed for clarity of a wall according to the present invention;
- Fig. 2 is a schematic plan view on reduced scale of figure 1;
- Fig. 3 is a bottom view on enlarged scale and with parts removed for clarity of figure 2;
- Fig. 4 is a schematic perspective view with parts removed for clarity of a portion extracted from figure 3;
- Fig. 5 is an exploded view of figure 4;
- Fig. 6 is a schematic perspective top view and on reduced scale of a detail extracted from figure 2;
- Fig. 7 illustrates the detail of the figure 6 overturned and subsequently rotated axially by 90° anticlockwise; and
- Fig. 8 is a bottom view on enlarged scale and with parts removed for clarity of figure 2, it represents the double of figure 3.

### DETAILED DESCRIPTION OF THE PRESENT INVENTION

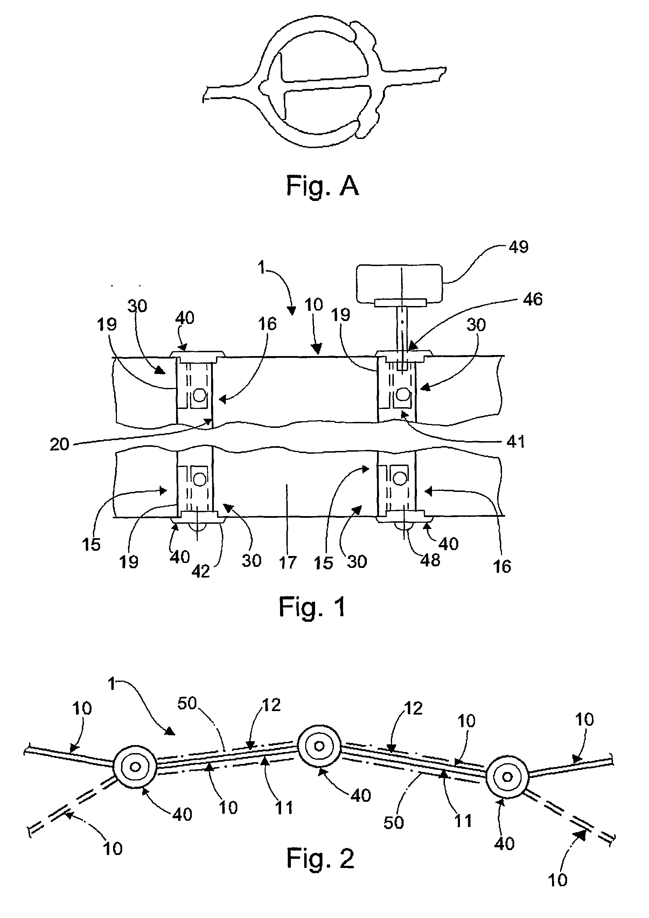

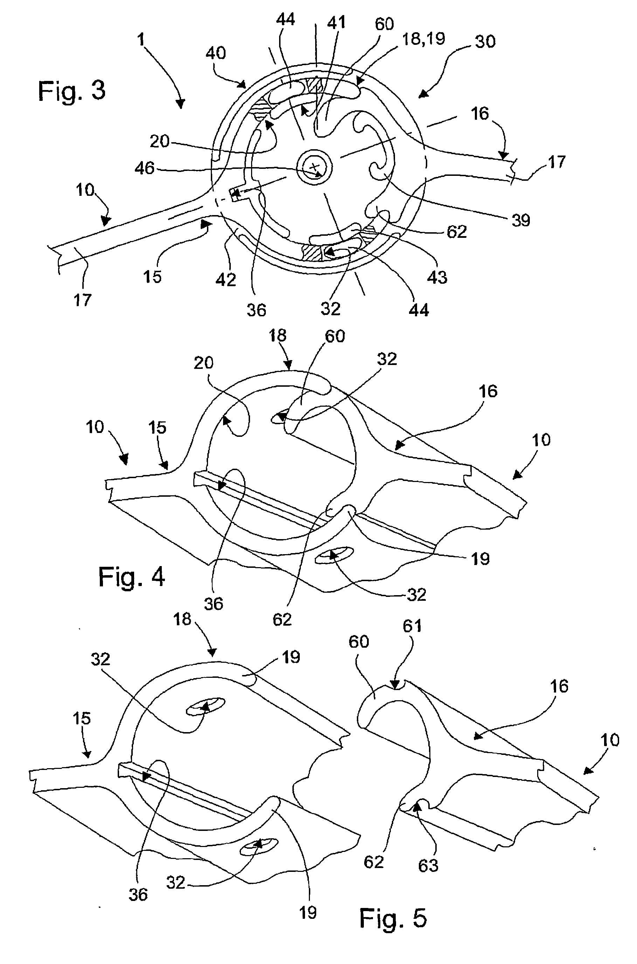

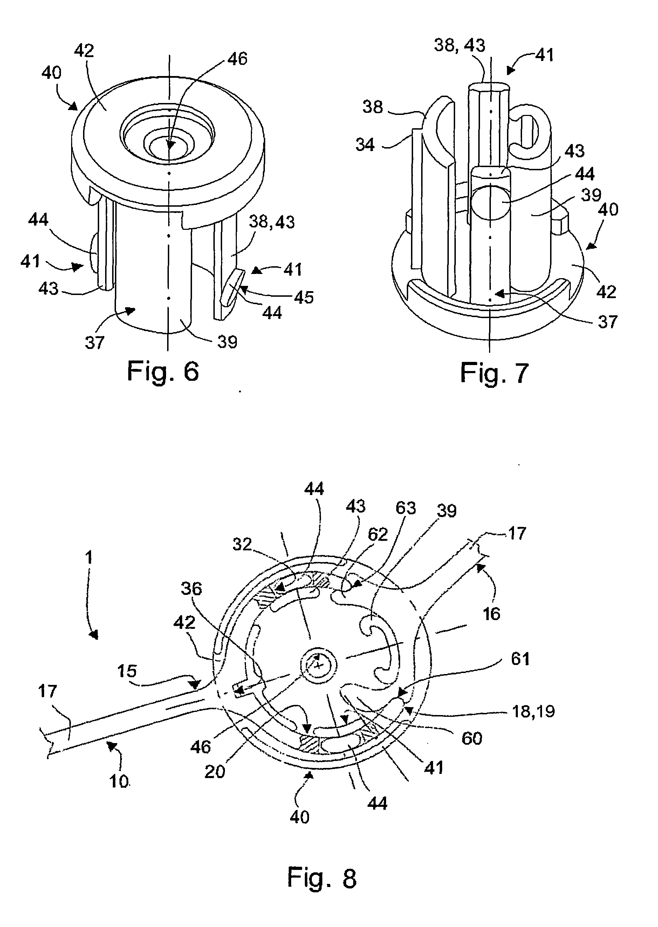

In figure 1, No 1 indicates overall a modular wall comprising a plurality of panels 10, each of which is delimited in width by the respective first and second portions 15 and 16 that are elongated in height, separated from one another by a central plate 17. These first and second portions 15 are 16 oriented vertically in the figure 1 and therefore transversely to their width. Furthermore, these elongated first and second portions 15 and 16 are shaped in such a way as to snap-connect two panels 10 that are slidingly adjacent to one another in respective length, as will be seen better below. The connection between the first and second elongated portions 15 and 16 gives rise to a cavity 20 with an annular cross section that is shown in figures 3 and 4. With this cavity 20 there is associated a locking unit 30 suitable for cooperating with the first and second elongated portions 15 and 16 of two panels that are coupled together to fix them together rigidly. This locking unit 30 comprises a locking member 40 that is more clearly visible in figures 6 and 7, that is shaped similarly to an internally hollow cap and is provided with an upper portion 42 that is similar to a cover and which will therefore be referred to as such hereinafter. It should be noted that the external cylindrical skirt 37 of the locking member 40 that engages the cavity 20 is interrupted in several parts to give rise to the longitudinal elements 38. In particular, the locking member 40 comprises at least an elastic connecting member 41 that is provided with a sheet 43 that is delimited longitudinally by a transverse end key 44 that is suitable for cooperating elastically with the first and second elongated portions 15 and 16. In particular, but not exclusively, the locking member 40 has a pair of connecting members 41 arranged diametrically opposite one another. Thus, as clearly illustrated in figures 6 and 7, each sheet 43 will normally correspond to one of the longitudinal element 38 obtained in the cylindrical skirt 37 of the locking member 40.

Each first/second elongated portion 15/16 of a panel 10 has a longitudinally open cross section for coupling the head with a second/first elongated portion 16/15 of an adjacent panel 10 and has at least a housing 32 for each key 44 belonging to each respective connecting member 41. As will be better illustrated below, each housing 32 is normally arranged in a longitudinal flap 18 of the first portion 15 of a panel 10, but could also be obtained in the second portion 16 of the panel 10, without the latter falling outside the protective scope of the present invention. In particular, each housing 32 is obtained at an end portions 19 that longitudinally delimits each flap 18, and in particular on the upper and lower end of the flaps 18, as the locking member 40 has to be associated to both the longitudinal ends of the portions 15 and 16 of panels that are coupled together.

It will be noted that each first portion 15 has an open cylindrical cross section and is delimited by two longitudinal flaps 18 that are opposite one another and are arranged substantially symmetrically with respect to the central plate 17 of the corresponding panel 10 to snap-connect panels 10 that are reciprocally tilted by an angle size that is determined by the shape of the second portion 16, as will become clearer from the following disclosure. This angle is sufficient to make the plurality of panels 10 of the wall self-supporting, which are coupled together two by two, even without any locking members 40, owing to the particular structure that derives from the combination of two or more panels 10. In particular, the type of coupling between the portions 15 and 16 of adjacent panels enables walls 1 to be made that have a substantially sinusoidal or closed/annular plan shape, as seen in figure 2, according to the continuous lines or the dashed lines. More in general, walls 1 can be made that have a plan shape in which sinusoid and/or curved portions follow one another in a set manner such as to adapt the plan of the wall 1 to the features of the place of installation.

With particular reference to figures 4 and 5, each housing 32 comprises a transverse hole made in the flap 18 and indicated for convenience by the same reference number as the housing 32. The key 44 is shaped in a manner matching the housing 32 to snap-engage the latter and for this purpose the key 44 has a circular cross section and a saw-tooth longitudinal section. The orientation of this key 44 is so as to define a tilted plane 45 that is suitable for imposing, upon assembly, increasing deformation on the sheet 43 that is proportional to the insertion degree of the sheet 43 in said cavity 20, up to a facing dimension with the housing 32, the height at which a snap-connection of the key 44 inside the housing 32 is caused. In this way, through the use of a pair of locking members 40, to be installed at the lower and upper ends of the cavity 20, it is possible to fix axially/longitudinally, in a mechanically loosenable manner, the first and second portions 15 and 16 of two adjacent panels and avoid accidental longitudinal sliding of a panel with respect to the another.

Each locking member 40 furthermore has at least a longitudinal rib 34 (shown in the detail only in figure 7), carried by a longitudinal element 38 in an equidistant position from the two sheets 43 to engage a longitudinal seat 36 obtained in at least one of the first and second elongated portions 15 and 16 to confer further stiffness on the connection between adjacent panels 10 and then to the structure of the wall 1. As clearly illustrated in figures 4 and 5, each seat 36 comprises a longitudinal furrow that is parallel to the flaps 18 of the portion 15 of the corresponding panel 10 without this constituting a limitation to the protective scope of the present invention.

It should be noted that the locking member 40 furthermore comprises, at the opposite side of rib 34, a further longitudinal element 39 that is shaped symmetrically with respect to the rib 34 and has a substantially C-shaped cross section and the function of which will be described better below.

Each locking member 40 has a seat 46 obtained centrally for housing a set member 47. This member 47 may preferably, but not exclusively, comprise a foot 48 suitable for supporting each corresponding panel 10 or a data support 49.

The total of the first and second elongated portions 15 and 16 of each panel 10 and of the faces of the plate 17 defines two opposite concave surfaces 11 and 12 that are shaped in a substantially identical manner. The shape of such surfaces 11 and 12 is such as to enable cladding 50 to be housed that have a thickness that is definable at will to give the corresponding panel 10 at least a set physical feature or simply to make it aesthetically more pleasing. For example, this cladding 50 can comprise material for heat and/or sound insulation or cladding having particular colour and/or textures.

With particular reference to figures 4 and 5, the second portion 16 is substantially C-shaped, and has a respective concavity facing the portion 15 of the panel 10 coupled therewith, and is delimited transversely by longitudinal edges 60 and 62. These edges 60 and 62 are engaged in a non-symmetric manner with respect to the plate 17 of the corresponding panel 10 and in use give rise to a set angle with respect to an adjacent panel 10, which is such as to make said wall 1 self-supporting. Furthermore, such edges 60 and 62 can preferably but not exclusively have respective concavities 61 and 63 of differing extent, both facing outside to be useful for mounting as follows. In particular, the concavity 63 of the edge 62 is suitable for being engaged by a lower flap 18 of the figure 5 to enable the left panel 10 in figure 5 to be rotated clockwise in figure 5 until the other flap 18, arranged above in figure 5, can come into contact with the outside of the edge 60. At this point, further clockwise rotation of the left panel 10 in figure 5 deforms the flap 18 arranged above in figure 5, which is the more yieldable element between the two elements placed in contact. Following this deformation, this flap 18 covers the edge 60 until it engages the concavity 61, as in figure 4.

Naturally, what has been described above with reference to the step of coupling the first and second portions 15 and 16 also applies if the panel 16 is upturned and is thus as in figure 8, which is the double of figure 3. This is in particular possible because the two edges 18 of the first elongated portion 15 are symmetrical to one another with respect to the panel 10, as is the locking member 40 with respect to the rib 34. Thus in figure 8 the second portion 16 is overturned with respect to what is arranged in figures 4 and 5 but the connecting procedure is exactly the same as disclosed above with an initial engagement of the concavity 63 by a first flap 18, shown above in figure 8, followed by rotation of the first elongated portion 15 that ends with the engaging of the concavity 61 by a second flap 18 of the first portion 15.

To prevent corrosion drawbacks in the contact between the locking member 40 and the corresponding portions 15 and 16, the locking member 40 is made of plastics and the respective shape enables it to be produced through a moulding procedure, so with very great volumes and very reduced costs.

The wall 1 and the locking member and the corresponding types of use can easily be appreciated from the above and do not require further explanations. From what has been disclosed above a method can furthermore be obtained for mounting and installing a modular wall 1. This method comprises the phase of preliminarily placing the panels 10 alongside one another that it is intended to use in such a way as to define a plan arrangement that is suitable for the needs of the case and is at the same time compatible with the requirements attributable, as disclosed above, to the wall 1. A step then follows in which the adjacent panels 10 are connected together, engaging a flap18 of the first elongated portion 15 in the respective concavity 63 of the second adjacent portion 16 and then rotating, as disclosed above, the first portion 15 until the free flap 18 occupies the respective concavity 61 of the second portion 16, causing a snap connection between the two adjacent panels 10. The method furthermore comprises the step of inserting a pair of locking members 40 at the upper and lower ends of each cavity 20 until the first portion is snap-connected at the corresponding housings 32 through the keys 44. This enables the connection of the adjacent panels 10 to be completed as the degree of longitudinal freedom is eliminated for each pair of panels 10 of the wall 1. The method comprises, according to the needs of the case, a possible step of inserting at least a foot 48 suitable for supporting the panels 10 in contact with the ground into the seat 46 of the lower locking members 40 and/or data support 49 in the seat 46 specially provided in the upper locking members 40. The method finally comprises the step of housing cladding means 50 with a thickness that can be defined at will to give the panels 10 of the wall 1 at least a set physical feature.

It is lastly clear that modifications can be made to the modular wall 1 and the locking member 40 disclosed and illustrated here without thereby falling outside the protective scope of this invention.

In all cases, on the basis of what has been disclosed above, it should be observed that the locking unit 30 is particularly valid inasmuch as it enables the technical drawbacks illustrated above to be overcome and is such as to make the wall 1 easy to mount and dismantle without requiring the use of tools of any type. In fact, the edges 60 and 62 of the second portion 16 are suitably shaped so as to enable the two adjacent panels 10 to be coupled together through a snap-connection according to a set angle size to make a wall 1 comprising a plurality of panels self-supporting, and the coupling of the two adjacent panels 10 is obtained by simple superimposing of the second portion of one of the two panels 10 by the flaps 18 of the other and the deformation of the latter set during mounting causes sufficient friction to keep the two panels in position. Furthermore, the engagement of the cavity 20 with a pair of locking members 40, i.e. one for each longitudinal end of the cavity 20, and engaging of the corresponding holes 32 by at least a key 44 for each locking member 40 of the sheets 43 enables the first and second portions 15 and 16 to be fixed longitudinally and further stiffness to be given to the assembly of the adjacent panels. It should be noted with reference to figure 3 that after completed installation of two panels that are adjacent to one another through the particular sizing of the locking member 40 and of the edge 60 of the second portion 16, the latter is clamped between a flap 18 of the first portion 15 and the longitudinal element 39. Thus this element 39 contributes to increasing the stiffness of the coupling of two panels 10 that are adjacent to one another. Thus the entire longitudinal element 39 and the corresponding flap 18 that engages the concavity 61 determines a clamp-connecting device 70 of the edge 60 arranged between the latter.

Lastly, in terms of the above disclosure, the simple inwards deformation of the sheets 43 enables a condition to be caused that is favourable to dismantling of the locking member 40 from the cavity 20 and enables the separation of the first and second portions 15 and 16 that were previously coupled together to be proceeded with.

## Claims

1. Locking member (40) for a modular wall comprising a plurality of panels (10), each of which is delimited in width by respective first and second portions (15) (16) elongated in height transversely to the respective width and shaped so as to form a snap connection of two said panels (10) that are slidingly adjacent to one another along the respective length, giving rise to a cavity (20) with an annular cross section; said locking member comprising at least a connecting member (41) houseable inside said cavity (20) for stiffly connecting two panels (10) that may be coupled together; **characterised in that** said two panels (10) may be coupled together through at least an elastic sheet (43) cooperating with at least one of the corresponding said first and second elongated portions (15) (16).

2. Member according to claim 1, **characterised in that** it is shaped similarly to a cap that is substantially cylindrical and internally hollow, and is provided with an external cylindrical skirt (37) that is interrupted in several parts to define longitudinal elements (38); each said longitudinal sheet (43) being associated with at least one of said longitudinal elements (38).

3. Member according to claim 2, **characterised in that** it comprises a cover (42) with which each said longitudinal sheet (43) is connected; each said sheet (43) being longitudinally delimited by a transverse key (44).

4. Connecting member according to claim 3, **characterised in that** said key (44) is shaped in such a way as to snap-engage a transverse housing (32) obtained in at least one of said first and second elongated portions (15) (16).

5. Connecting member according to claim 4, **characterised in that** said key (44) has a circular cross section and longitudinal saw-tooth section oriented so as to define a tilted plane (45) suitable for imposing, upon assembly, a growing deformation on said sheet (43) that is proportional to the degree of insertion into said cavity (20), as far as the height facing said housing (32) to then cause snap-engagement of said key (44) inside said housing (32).

6. Member according to any one of preceding claims, **characterised in that** it comprises at least a longitudinal rib (34) suitable for engaging a longitudinal seat obtained in at least one of said first and second elongated portions (15) (16) to confer further stiffness on the connection between said adjacent panels (10) and therefore on the structure of said wall (1).

7. Member according to any one of preceding claims, **characterised in that** it is made by moulding plastics to avoid problems of corrosion in contact with each said panel (10).

8. Member according to any one of preceding claims, **characterised in that** it has a seat (46) for housing a set member (47).

9. Member according to claim 8, **characterised in that** said set member (47) comprises a foot (48) suitable for supporting each said panel (10).

10. Member according to claim 9, **characterised in that** said set member (47) comprises a data support (49).

11. Member according to any one of preceding claims, **characterised in that** it comprises a longitudinal element (39) that has a substantially C-shaped cross section and is suitable for collaborating with a said flap (18) of said first elongated portion (15) for clamping an edge (60) of said second portion (16).

12. Member according to claim 11, **characterised in that** said longitudinal member (39) and said flap (18) of said first elongated portion (15) define a clamp-connecting device (70).

13. Member according to claims 3, 6 and 11, **characterised in that** it comprises four said longitudinal elements (38) arranged to be faced two by two and each arranged transversely to each said adjacent longitudinal element (38); a first of said four longitudinal elements (38) having externally said rib (34), the two longitudinal elements (38) adjacent to first said longitudinal element (38) comprising a said sheet (43) provided with the respective said key (44), and fourth said longitudinal element (38) facing the first said longitudinal element (38) comprising said substantially C-shaped longitudinal element (39).

14. Modular wall (1) comprising a plurality of panels (10), each of which is delimited in width by respective first and second portions (15) (16) elongated in height transversely to the respective width and shaped so as to form a snap connection of at least two said panels (10) that are slidingly adjacent to one another along the respective length, giving rise to a cavity (20) with an annular cross section; said wall comprising fixing means (30) suitable for cooperating with said first and second elongated portions (15) (16) of two panels (10) that are coupled together, said fixing means (30) comprising at least a connecting member (41) housed inside said cavity (20) to rigidly fix said two panels (10) coupled together; **characterized in that** said two panels (10) are coupled together through at least an elastic sheet (43) cooperating with at least one of the corresponding said first and second elongated portions (15) (16).

15. Wall according to claim 14, **characterised in that** each first/second elongated portion (15) (16) has a longitudinally open cross section for coupling a head with a said second/first elongated portion (16) (15) of a said adjacent panel (10); said fixing means (30) comprising at least a housing (32) for said elastic connecting member (41).

16. Wall according to claim 15, **characterised in that** each said housing (32) is obtained in at least one of said first and second elongated portions (15) (16); said fixing means (30) furthermore comprising at least a locking member (40) provided with at least a said elastic connecting member (41).

17. Wall according to claim 16, **characterised in that** said first elongated portion (15) terminates on the side of said second portion (16) with at least a respective longitudinal flap (18) having at least a said housing (32) and at least a respective end longitudinal portion (19); said locking member (40) comprising a cover (42) provided with at least a sheet (43) delimited longitudinally by a transverse end key (44).

18. Wall according to claim 17, **characterised in that** said key (44) is shaped in a manner matching the respective said housing (32) to engage it in a snap-connecting manner.

19. Wall according to claim 18, **characterised in that** said key (44) has a longitudinally circular saw-tooth cross section oriented so as to define a plane (45) tilted so as to impose during mounting an increasing deformation on said sheet (43) that is proportional to the degree of insertion into said cavity (20), until a height facing said housing (32) in order to then cause a snap engagement of said key (44) inside said housing (32).

20. Wall according to any one of preceding claims 16-19, **characterised in that** said fixing means (30) comprises at least a longitudinal rib (34) carried by said locking member (40) to engage a longitudinal seat obtained in at least one of said first and second elongated portions (15) (16) to confer further stiffness on the connection between said adjacent panels (10) and therefore on the structure of said wall (1).

21. Wall according to any one of preceding claims 14-20, **characterised in that** each said second portion (16) is substantially C-shaped, and has a respective concavity facing said first elongated portion (15) of the corresponding said panel (10) coupled therewith, and is delimited transversely by a first and by a second longitudinal edge (60) (62) arranged in a non-symmetrical manner with respect to the corresponding said panel 10 to give rise, during use, to an angle set with respect to a said adjacent panel; said set angle being suitable for making said wall 1 self-supporting.

22. Wall according to any one of preceding claims 14-21, **characterised in that** said fixing means (30) comprises at least a clamp-connecting device (70) of said first edge (60).

23. Wall according to claim 22, **characterised in that** said clamp-connecting device (70) comprises a longitudinal element (39) of said locking member (40) and a said longitudinal flap (18) of said first portion (15) arranged, during use, on opposite sides of said first edge (60).

24. Wall according to claim 10, **characterised in that** said longitudinal element (39) of said locking member (40) has a substantially C-shaped cross section and is arranged on an opposite side of said longitudinal rib (34).

25. Wall according to any one of preceding claims 21-24, **characterised in that** said first and second edges (60) (62) have respective first and second concavities (61) (63) with differing extents, both facing outwards to cooperate with mounting with each corresponding flap (18) of said first elongated portion (15) of a corresponding first panel (10) coupled therewith.

26. Wall according to claim 25, **characterised in that** said second edge (62) is shaped to house, during use, a first said flap (18) of a first said portion (15) inside the respective said second concavity (63) and to enable said first portion (15) to be rotated during assembly until a second said flap (18) is enabled to come into contact with the outside of said first edge (60), keeping mating contact between said second edge (62) and said first flap (18).

27. Wall according to claim 26, **characterised in that** said first edge (60) is suitable for being covered by said second flap (18) that is deformed transversely to complete a snap connection that is longitudinally free between said first and second portions (15) (16), with said second flap (18) engaging said first concavity (61).

28. Wall according to any one of preceding claims 15-27, **characterised in that** each said housing (32) comprises a cylindrical hole (32).

29. Wall according to any one of preceding claims 16-28, **characterised in that** each said locking member (40) has a seat (46) for housing a set member (47).

30. Wall according to claim 29, **characterised in that** said set member (47) comprises a foot (48) suitable for supporting each said panel (10).

31. Wall according to claim 29, **characterised in that** said set member (47) comprises a data support (49).

32. Wall according to any one of preceding claims 14-31, **characterised in that** each said second portion (16) ends on the side of said first elongated portion (15) with two said first and second longitudinal edges (60) (62) opposite one another; said first and second edges (60) (62) being shaped transversely so as to enable the two corresponding panels (10) to be snap-coupled together according to a set angle size to make a plurality of panels (10) self-supporting, which are coupled together two by two.

33. Wall according to any one of preceding claims 14-32, **characterised in that** each said panel (10) is delimited frontally by a concave surface (11) (12), delimited in width by the respective first and second elongated portions (15) (16) to house cladding means (50) with a thickness definable at will to give each said panel (10) at least a set physical feature.

34. Wall according to claim 33, **characterised in that** said cladding means (50) comprises material for heat insulation.

35. Wall according to claim 33 or 34, **characterised in that** said cladding means (50) comprises soundproofing material.

36. Wall according to any one of preceding claims 27-35, **characterised in that** it has a substantially sinusoidal plan shape.

37. Wall according to any one of preceding claims 27-35, **characterised in that** it has a substantially annular plan shape.

38. Method for mounting and installing a modular wall made with reference to claims 14-37 and comprising a plurality of panels (10), said method comprising a step of connecting adjacent pairs of said panels (10), first engaging a flap (18) of a first portion (15) in a respective concavity (63) of a second adjacent portion (16) and subsequently rotating said first elongated portion (15) until a second free flap (18) thereof occupies a respective concavity (63) of said second portion (16), causing a longitudinally free snap connection that is able to make the wall (1) self-supporting, said method being **characterised in that** it comprises housing at least a connecting member (41) inside a cavity (20) defined by said first and second portions (15, 16) so that said two panels are coupled together through at least an elastic sheet (43) cooperating with at least one of the corresponding said first and second portions (15, 16).

39. Method for mounting and installing a modular wall according to claim 38 **characterised in that** said step of connecting adjacent pairs of said panels (10) is preceded by the phase of placing said panels (10) alongside in order to define a plan configuration for said wall (1) that is suitable for the needs of the case and is at the same time compatible with those attributable to the structure of said wall (1).

40. Method for mounting and installing a modular wall according to claim 38 or 39, **characterised in that** said step of connecting said panels (10) that are adjacent to one another is followed by a step of inserting a pair of locking members (40) at the upper and lower ends of each cavity (20), comprised between said first and second elongated portions (15) (16), until at least one of said first and second elongated portions (15) (16) is engaged, in order to longitudinally connect in a mechanically loosenable manner said adjacent panels (10) and confer further stiffness on said wall (1).

41. Method for mounting and installing a modular wall according to claim 40, **characterised in that** it comprises a step of associating at least a foot (48) suitable for supporting said panels (10) with at least one of said locking members (40).

42. Method for mounting and installing a modular wall according to claim 40 or 41, **characterised in that** it comprises a step of associating at least a data support (49) with at least one of said locking members (40).

43. Method for mounting and installing a modular wall according to any one of claims 38-42, **characterised in that** it comprises the step of housing cladding means (50) of a thickness that is definable at will to give said panels (10) at least a set physical feature.

## Patentansprüche

1. Verriegelungsglied (40) für eine modulare Wand, die mehrere Paneele (10) umfasst, von denen jedes in der Breite durch einen entsprechenden ersten Abschnitt (15) und einen entsprechenden zweiten Abschnitt (16) begrenzt ist, die quer zu der entsprechenden Breite in der Höhe länglich sind und derart ausgestaltet sind, dass sie eine Schnappverbindung von zwei Paneelen (10) ausbilden, welche entlang der entsprechenden Länge verschiebbar benachbart zueinander angeordnet sind und einen Hohlraum (20) mit einem ringförmigen Querschnitt ausbilden; wobei das Verriegelungsglied mindestens ein Verbindungsglied (41) umfasst, welches zum steifen Verbinden von zwei Paneelen (10), die aneinander gekoppelt werden können, in dem Hohlraum (20) aufnehmbar ist; **dadurch gekennzeichnet, dass** die beiden Paneele (10) durch mindestens eine elastische Platte (43), die mit mindestens einem aus der Gruppe umfassend den entsprechenden ersten länglichen Abschnitt (15) und den entsprechenden zweiten länglichen Abschnitt (16) zusammenwirkt, aneinander gekoppelt werden können.

2. Glied nach Anspruch 1, **dadurch gekennzeichnet, dass** dieses ähnlich einer Kappe ausgestaltet ist, welche im wesentlichen zylindrisch und innen hohl ist, und mit einer äußeren zylindrischen Schürze (37) versehen ist, die an mehreren Stellen unterbrochen ist, um Längselemente (38) zu definieren; wobei jede Längsplatte (43) mindestens einem der Längselemente (38) zugeordnet ist.

3. Glied nach Anspruch 2, **dadurch gekennzeichnet, dass** es eine Abdeckung (42) umfasst, mit welcher jede Längsplatte (43) verbunden ist; wobei jede Platte (43) in Längsrichtung durch einen Querkeil (44) begrenzt ist.

4. Verbindungsglied nach Anspruch 3, **dadurch gekennzeichnet, dass** der Keil (44) derart ausgestaltet ist, dass er mit einer Queraufnahme (32), die in mindestens einem aus der Gruppe umfassend den ersten länglichen Abschnitt (15) und den zweiten länglichen Abschnitt (16) realisiert ist, in Schnappeingriff gelangt.

5. Verbindungsglied nach Anspruch 4, **dadurch gekennzeichnet, dass** der Keil (44) einen kreisförmigen Querschnitt und einen sägezahnartigen Längsschnitt aufweist, der derart ausgerichtet ist, dass er eine geneigte Ebene (45) definiert, die dazu geeignet ist, die Platte (43) beim Zusammenbau mit einer zunehmenden Verformung zu beaufschlagen, welche proportional zu dem Grad des Einführens in den Hohlraum (20) ist, bis zu der dieser Aufnahme (32) gegenüberliegenden Höhe, um dann einen Schnappeingriff des Keils (44) in die Aufnahme (32) zu bewirken.

6. Glied nach einem beliebigen der vorhergehenden Ansprüche, **dadurch gekennzeichnet, dass** es mindestens eine Längsrippe (34) umfasst, die zum Eingreifen mit einem Längssitz, der in mindestens einem aus der Gruppe umfassend den ersten länglichen Abschnitt (15) und den zweiten länglichen Abschnitt (16) realisiert ist, geeignet ist, um der Verbindung zwischen benachbarten Paneelen (10) und demnach der Konstruktion der Wand (1) zusätzliche Steifigkeit zu verleihen.

7. Glied nach einem beliebigen der vorhergehenden Ansprüche, **dadurch gekennzeichnet, dass** es durch Formen von Kunststoffen hergestellt wird, um Korrosionsprobleme beim Kontakt mit jedem der Paneele (10) zu vermeiden.

8. Glied nach einem beliebigen der vorhergehenden Ansprüche, **dadurch gekennzeichnet, dass** es einen Sitz (46) zum Aufnehmen eines Stellelements (47) aufweist.

9. Glied nach Anspruch 8, **dadurch gekennzeichnet, dass** das Stellelement (47) einen Fuß (48) umfasst, der zum Tragen jedes der Paneele (10) geeignet ist.

10. Glied nach Anspruch 9, **dadurch gekennzeichnet, dass** das Stellelement (47) eine Datenhalterung (49) umfasst.

11. Glied nach einem beliebigen der vorhergehenden Ansprüche, **dadurch gekennzeichnet, dass** es ein Längselement (39) umfasst, welches einen im wesentlichen C-förmigen Querschnitt aufweist und für ein Zusammenwirken mit einer Lasche (18) des ersten länglichen Abschnitts (15) zum Festklemmen einer Kante (60) des zweiten Abschnitts (16) geeignet ist.

12. Glied nach Anspruch 11, **dadurch gekennzeichnet, dass** das Längsglied (39) und die Lasche (18) des ersten länglichen Abschnitts (15) eine Klemmverbindungsvorrichtung (70) definieren.

13. Glied nach Anspruch 3, 6 und 11, **dadurch gekennzeichnet, dass** es vier Längselemente (38) umfasst, die angeordnet sind, um in Gruppen zu je zwei einander gegenüberzuliegen, und wobei jedes quer zu jedem benachbarten Längselement (38) angeordnet ist; wobei ein erstes der vier Längselemente (38) außen die Rippe (34) aufweist, wobei die zwei Längselemente (38), die dem ersten Längselement (38) benachbart sind, eine Platte (43) umfassen, die mit dem entsprechenden Keil (44) versehen ist, und wobei das vierte Längselement (38) dem ersten Längselement (38) gegenüber angeordnet ist und das im Wesentlichen C-förmige Längselement (39) umfasst.

14. Modulare Wand (1), umfassend mehrere Paneele (10), von denen jedes in der Breite durch einen entsprechenden ersten Abschnitt (15) und einen entsprechenden zweiten (16) Abschnitt begrenzt ist, die quer zu der entsprechenden Breite in der Höhe länglich sind und derart ausgestaltet sind, dass sie eine Schnappverbindung von mindestens zwei Paneelen (10) ausbilden, welche entlang der entsprechenden Länge verschiebbar benachbart zueinander angeordnet sind und einen Hohlraum (20) mit einem ringförmigen Querschnitt ausbilden; wobei die Wand ein Befestigungsmittel (30) umfasst, das geeignet ist, mit dem ersten Abschnitt (15) und dem zweiten Abschnitt (16) der beiden Paneele (10), die aneinander gekoppelt werden, zusammenzuwirken, wobei das Befestigungsmittel (30) mindestens ein Verbindungsglied (41) umfasst, das in dem Hohlraum (20) aufgenommen ist, um die beiden aneinander gekoppelten Paneele (10) starr zu befestigen; **dadurch gekennzeichnet, dass** die beiden Paneele (10) durch mindestens eine elastische Platte (43) aneinander gekoppelt sind, die mit mindestens einem der entsprechenden ersten und zweiten länglichen Abschnitte (15) (16) zusammenwirkt.

15. Wand nach Anspruch 14, **dadurch gekennzeichnet, dass** jeder aus der Gruppe umfassend den ersten länglichen Abschnitt (15) und den zweiten länglichen Abschnitt (16) einen in Längsrichtung offenen Querschnitt zum Koppeln eines Kopfes mit einem zweiten/ersten länglichen Abschnitt (16) (15) eines benachbarten Paneels (10) aufweist; wobei das Befestigungsmittel (30) mindestens eine Aufnahme (32) für das elastische Verbindungsglied (41) umfasst.

16. Wand nach Anspruch 15, **dadurch gekennzeichnet, dass** jede Aufnahme (32) in mindestens einem aus der Gruppe umfassend den ersten länglichen Abschnitt (15) und den zweiten länglichen Abschnitt (16) realisiert ist; wobei das Befestigungsmittel (30) ferner mindestens ein Verriegelungsglied (40) umfasst, das mit mindestens einem elastischen Verbindungsglied (41) versehen ist.

17. Wand nach Anspruch 16, **dadurch gekennzeichnet, dass** der erste längliche Abschnitt (15) auf der Seite des zweiten Abschnitts (16) mit mindestens einer entsprechenden Längslasche (18) endet, welche mindestens eine Aufnahme (32) und mindestens einen entsprechenden Endlängsabschnitt (19) aufweist; wobei das Verriegelungsglied (40) eine Abdeckung (42) umfasst, die mit mindestens einer Platte (43) versehen ist, welche in Längsrichtung durch einen Querendkeil (44) begrenzt ist.

18. Wand nach Anspruch 17, **dadurch gekennzeichnet, dass** der Keil (44) auf eine Weise ausgestaltet ist, welche der entsprechenden Aufnahme (32) entspricht, um mit dieser schnappverbindend in Eingriff zu gelangen.

19. Wand nach Anspruch 18, **dadurch gekennzeichnet, dass** der Keil (44) einen in Längsrichtung verlaufenden kreisförmigen Sägezahnquerschnitt aufweist, der derart ausgerichtet ist, dass er eine Ebene (45) definiert, die geneigt ist, um während der Montage die Platte (43) mit einer zunehmenden Verformung zu beaufschlagen, die proportional zu dem Grad des Einführens in den Hohlraum (20) ist, bis zu einer der Aufnahme (32) gegenüberliegenden Höhe, um dann einen Schnappeingriff des Keils (44) in die Aufnahme (32) zu bewirken.

20. Wand nach einem beliebigen der vorhergehenden Ansprüche 16-19, **dadurch gekennzeichnet, dass** das Befestigungsmittel (30) mindestens eine Längsrippe (34) umfasst, die durch das Verriegelungsglied (40) getragen wird, um mit einem Längssitz in Eingriff zu gelangen, der in mindestens einem aus der Gruppe umfassend den ersten länglichen Abschnitt (15) und den zweiten länglichen Abschnitt (16) realisiert ist, um der Verbindung zwischen den benachbarten Paneelen (10) und somit der Konstruktion der Wand (1) zusätzliche Steifigkeit zu verleihen.

21. Wand nach einem beliebigen der vorhergehenden Ansprüche 14-20, **dadurch gekennzeichnet, dass** jeder besagte zweite Abschnitt (16) im wesentlichen C-förmig ist und eine entsprechende Konkavität aufweist, die dem ersten länglichen Abschnitt (15) des entsprechenden damit gekoppelten Paneels (10) zugewandt ist, und in Querrichtung durch eine erste Längskante (60) und eine zweite Längskante (62) begrenzt ist, die in Bezug auf das entsprechende Paneel (10) auf nicht symmetrische Weise angeordnet sind, um bei der Verwendung einen eingestellten Winkel in Bezug auf ein benachbartes Paneel zu ergeben, wobei der eingestellte Winkel dazu geeignet ist, die Wand 1 selbsttragend zu machen.

22. Wand nach einem beliebigen der vorhergehenden Ansprüche 14-21, **dadurch gekennzeichnet, dass** das Befestigungsmittel (30) mindestens eine Klemmverbindungsvorrichtung (70) für die erste Kante (60) umfasst.

23. Wand nach Anspruch 22, **dadurch gekennzeichnet, dass** die Klemmverbindungsvorrichtung (70) ein Längselement (39) des Verriegelungsglieds (40) und eine Längslasche (18) des ersten Abschnitts (15) umfasst, die beim Gebrauch an entgegengesetzten Seiten der ersten Kante (60) angeordnet sind.

24. Wand nach Anspruch 10, **dadurch gekennzeichnet, dass** das Längselement (39) des Verriegelungsglieds (40) einen im wesentlichen C-förmigen Querschnitt aufweist und an einer der Längsrippe (34) entgegengesetzten Seite angeordnet ist.

25. Wand nach einem beliebigen der vorhergehenden Ansprüche 21-24, **dadurch gekennzeichnet, dass** die erste Kante (60) und die zweite Kante (62) entsprechende erste und zweite Konkavitäten (61) (63) von unterschiedlichem Ausmaß aufweisen, wobei beide nach außen gewandt sind, um bei der Montage mit jeder entsprechenden Lasche (18) des ersten länglichen Abschnitts (15) eines damit gekoppelten entsprechenden ersten Paneels (10) zusammenzuwirken.

26. Wand nach Anspruch 25, **dadurch gekennzeichnet, dass** die zweite Kante (62) ausgestaltet ist, um beim Gebrauch eine erste Lasche (18) eines ersten Abschnitts (15) in der entsprechenden zweiten Konkavität (63) aufzunehmen und um zu ermöglichen, den ersten Abschnitt (15) während des Zusammenbaus zu drehen, bis ermöglicht wird, dass eine zweite Lasche (18) mit der Außenseite der ersten Kante (60) in Kontakt gelangt, wobei zwischen der zweiten Kante (62) und der ersten Lasche (18) ineinandergreifender Kontakt aufrechterhalten wird.

27. Wand nach Anspruch 26, **dadurch gekennzeichnet, dass** die erste Kante (60) geeignet ist, durch die zweite Lasche (18) abgedeckt zu werden, welche in Querrichtung verformt wird, um eine Schnappverbindung zu realisieren, die in Längsrichtung zwischen dem ersten Abschnitt (15) und dem zweiten Abschnitt (16) frei ist, wobei die zweite Lasche (18) mit der ersten Konkavität (61) in Eingriff gelangt.

28. Wand nach einem beliebigen der vorhergehenden Ansprüche 15-27, **dadurch gekennzeichnet, dass** jede Aufnahme (32) ein zylindrisches Loch (32) umfasst.

29. Wand nach einem beliebigen der vorhergehenden Ansprüche 16-28, **dadurch gekennzeichnet, dass** jedes Verriegelungsglied (40) einen Sitz (46) zum Aufnehmen eines Stellelements (47) aufweist.

30. Wand nach Anspruch 29, **dadurch gekennzeichnet, dass** das Stellelement (47) einen Fuß (48) umfasst, der zum Tragen jedes Paneels (10) geeignet ist.

31. Wand nach Anspruch 29, **dadurch gekennzeichnet, dass** das Stellelement (47) eine Datenhalterung (49) umfasst.

32. Wand nach einem beliebigen der vorhergehenden Ansprüche 14-31, **dadurch gekennzeichnet, dass** jeder besagte zweite Abschnitt (16) auf der Seite des ersten länglichen Abschnitts (15) mit zwei aus der Gruppe umfassend die erste Längskante (60) und die zweite Längskante (62) endet, die einander entgegengesetzt sind; wobei die erste Kante (60) und die zweite Kante (62) in Querrichtung ausgestaltet sind, um zu ermöglichen, dass die beiden entsprechenden Paneele (10) gemäß einer eingestellten Winkelgröße miteinander schnappverbunden werden, um mehrere Paneele (10), die paarweise aneinander gekoppelt sind, selbsttragend zu machen.

33. Wand nach einem beliebigen der vorhergehenden Ansprüche 14-32, **dadurch gekennzeichnet, dass** jedes Paneel (10) frontal durch eine konkave Oberfläche (11) (12) begrenzt ist, und in der Breite durch den entsprechenden ersten länglichen Abschnitt (15) und den entsprechenden zweiten länglichen Abschnitt (16) begrenzt ist, um ein Verkleidungsmittel (50) mit einer Dicke aufzunehmen, die beliebig definierbar ist, um jedem Paneel (10) mindestens ein vorgegebenes körperliches Merkmal zu verleihen.

34. Wand nach Anspruch 33, **dadurch gekennzeichnet, dass** das Verkleidungsmittel (50) Material zur Wärmedämmung umfasst.

35. Wand nach Anspruch 33 oder 34, **dadurch gekennzeichnet, dass** das Verkleidungsmittel (50) Schalldämmungsmaterial umfasst.

36. Wand nach einem beliebigen der vorhergehenden Ansprüche 27-35, **dadurch gekennzeichnet, dass** sie eine im wesentlichen sinusförmige Grundrissform aufweist.

37. Wand nach einem beliebigen der vorhergehenden Ansprüche 27-35, **dadurch gekennzeichnet, dass** sie eine im wesentlichen ringförmige Grundrissform aufweist.

38. Verfahren zum Montieren und Installieren einer modularen Wand, die mit Bezugnahme auf die Ansprüche 14-37 hergestellt wird und mehrere Paneele (10) umfasst, wobei das Verfahren umfasst: einen Schritt des Verbindens benachbarter Paare von Paneelen (10), wobei zunächst eine Lasche (18) des ersten Abschnitts (15) in einer entsprechenden Konkavität (63) eines zweiten benachbarten Abschnitts (16) in Eingriff gebracht wird und daraufhin der erste längliche Abschnitt (15) gedreht wird, bis eine zweite freie Lasche (18) davon eine entsprechende Konkavität (63) des zweiten Abschnitts (16) belegt, wodurch eine in Längsrichtung freie Schnappverbindung realisiert wird, die in der Lage ist, die Wand (1) selbsttragend zu machen, wobei das Verfahren **dadurch gekennzeichnet ist, dass** es das Aufnehmen von mindestens einem Verbindungsglied (41) in einem Hohlraum (20) umfasst, der durch den ersten Abschnitt (15) und den zweiten Abschnitt (16) definiert wird, so dass die zwei Paneele durch mindestens eine elastische Platte (43), welche mit mindestens einem aus der Gruppe umfassend den entsprechenden ersten Abschnitt (15) und den entsprechenden zweiten Abschnitt (16) zusammenwirkt, aneinander gekoppelt werden.

39. Verfahren zum Montieren und Installieren einer modularen Wand nach Anspruch 38, **dadurch gekennzeichnet, dass** vor dem Schritt des Verbindens benachbarter Paare der Paneele (10) die Phase des längsseitigen Anordnens der Paneele (10) erfolgt, um eine Grundrisskonfiguration für die Wand (1) zu definieren, die für die Bedürfnisse des Falls geeignet ist und zugleich mit jenen, die der Konstruktion der Wand (1) zugeordnet werden können, kompatibel ist.

40. Verfahren zum Montieren und Installieren einer modularen Wand nach Anspruch 38 oder 39, **dadurch gekennzeichnet, dass** auf den Schritt des Verbindens der Paneele (10), die einander benachbart sind, ein Schritt des Einführens eines Paars von Verriegelungsgliedern (40) an dem oberen und dem unteren Ende jedes Hohlraums (20), der zwischen dem ersten länglichen Abschnitt (15) und dem zweiten länglichen Abschnitt (16) gebildet wird, folgt, bis mindestens einer aus der Gruppe umfassend den ersten länglichen Abschnitt (15) und den zweiten länglichen Abschnitt (16) in Eingriff gelangt, um die benachbarten Paneele (10) in Längsrichtung auf mechanisch lösbare Weise zu verbinden und der Wand (1) zusätzliche Steifigkeit zu verleihen.

41. Verfahren zum Montieren und Installieren einer modularen Wand nach Anspruch 40, **dadurch gekennzeichnet, dass** es einen Schritt des Anfügens von mindestens einem Fuß (48), der zum Tragen der Paneele (10) geeignet ist, an mindestens eines der Verriegelungsglieder (40) umfasst.

42. Verfahren zum Montieren und Installieren einer modularen Wand nach Anspruch 40 oder 41, **dadurch gekennzeichnet, dass** es einen Schritt des Anfügens von mindestens einer Datenhalterung (49) an mindestens eines der Verriegelungsglieder (40) umfasst.

43. Verfahren zum Montieren und Installieren einer modularen Wand nach einem beliebigen der Ansprüche 38-42, **dadurch gekennzeichnet, dass** es den Schritt des Aufnehmens von Verkleidungsmitteln (50) mit einer Dicke umfasst, die beliebig definierbar ist, um den Paneelen (10) mindestens ein vorgegebenes körperliches Merkmal zu verleihen.

## Revendications

1. Elément de verrouillage (40) pour un mur modulaire comprenant une pluralité de panneaux (10), chacun d'eux étant délimité en largeur par une première une et seconde parties (15) (16) respectives allongées en hauteur transversalement à la largeur respective et formées de façon à former un raccordement par emboîtement de deux desdits panneaux (10) qui sont adjacents de manière coulissante l'un à l'autre le long de la longueur respective, constituant une cavité (20) avec une section transversale annulaire ; ledit élément de verrouillage comprenant au moins un élément de raccordement (41) pouvant être logé à l'intérieur de ladite cavité (20) pour raccorder de manière rigide deux panneaux (10) qui peuvent être couplés ensemble ; **caractérisé en ce que** lesdits deux panneaux (10) peuvent être couplés ensemble par au moins une feuille élastique (43) s'accouplant avec au moins l'une desdites première et seconde parties allongées (15) (16) correspondantes.

2. Elément selon la revendication 1, **caractérisé en ce qu'**il est formé de manière similaire à un couvercle sensiblement cylindrique et creux en son intérieur, et est doté d'une jupe cylindrique extérieure (37) qui est coupée en plusieurs parties pour définir des éléments longitudinaux (38) ; chacune desdites feuilles longitudinales (43) étant associée avec au moins l'un desdits éléments longitudinaux (38).

3. Elément selon la revendication 2, **caractérisé en ce qu'**il comprend un couvercle (42) avec lequel chacune desdites feuilles longitudinales (43) est raccordée; chacune desdites feuilles (43) étant délimitée longitudinalement par une clé transversale (44).

4. Elément de raccordement selon la revendication 3, **caractérisé en ce que** ladite clé (44) est formée de façon à accoupler par emboîtement un logement transversal (32) obtenu dans au moins l'une desdites première et seconde parties allongées (15) (16).

5. Elément de raccordement selon la revendication 4, **caractérisé en ce que** ladite clé (44) a une section transversale circulaire et une section longitudinale en dents de scie orientée de façon à définir un plan incliné (45) adapté pour imposer, au moment du montage, une déformation croissante sur ladite feuille (43) qui est proportionnelle au degré d'insertion dans ladite cavité (20), jusqu'à la hauteur face audit logement (32) pour entraîner ensuite l'accouplement par emboîtement de ladite clé (44) à l'intérieur dudit logement (32).

6. Elément selon l'une quelconque des revendications précédentes, **caractérisé en ce qu'**il comprend au moins une nervure longitudinale (34) adaptée pour s'accoupler avec un siège longitudinal obtenu dans au moins l'une desdites première et seconde parties allongées (15) (16) pour conférer une rigidité supplémentaire au raccordement entre lesdits panneaux (10) adjacents et par conséquent sur la structure dudit mur (1).

7. Elément selon l'une quelconque des revendications précédentes, **caractérisé en ce qu'**il est constitué en moulant du plastique pour éviter des problèmes de corrosion en contact avec chacun desdits panneaux (10).

8. Elément selon l'une quelconque des revendications précédentes, **caractérisé en ce qu'**il comporte un siège (46) pour le logement d'un élément déterminé (47).

9. Elément selon la revendication 8, **caractérisé en ce que** ledit élément déterminé (47) comprend un pied (48) adapté pour supporter chacun desdits panneaux (10).

10. Elément selon la revendication 9, **caractérisé en ce que** ledit élément déterminé (47) comprend un support de données (49).

11. Elément selon l'une quelconque des revendications précédentes, **caractérisé en ce qu'**il comprend un élément longitudinal (39) ayant une section transversale sensiblement en C et est adapté pour collaborer avec un rabat (18) de ladite première partie allongée (15) pour serrer un bord (60) de ladite seconde partie (16).

12. Elément selon la revendication 11, **caractérisé en ce que** ledit élément longitudinal (39) et ledit rabat (18) de ladite première partie allongée (15) définissent un dispositif de raccordement par serrage (70).

13. Elément selon les revendications 3, 6 et 11, **caractérisé en ce qu'**il comprend quatre desdits éléments longitudinaux (38) agencés pour être orientés deux par deux et chacun agencé transversalement à chacun desdits éléments longitudinaux (38) adjacents ; un premier desdits quatre éléments longitudinaux (38) ayant à l'extérieur de ladite nervure (34), les deux éléments longitudinaux (38) adjacents audit premier élément longitudinal (38) comprenant une feuille (43) dotée de ladite clé (44) respective, et quatre desdits éléments longitudinaux (38) face audit premier élément longitudinal (38) comprenant ledit élément longitudinal sensiblement en C (39).

14. Mur modulaire (1) comprenant une pluralité de panneaux (10), chacun d'eux étant délimité en largeur par une première et une seconde partie (15) (16) respectives allongées en hauteur transversalement à la largeur respective et formé de façon à former un raccordement par emboîtement d'au moins deux desdits panneaux (10) qui sont adjacents de manière coulissante l'un à l'autre le long de la longueur respective, constituant une cavité (20) avec une section transversale annulaire ; ledit mur comprenant un moyen de fixation (30) adapté pour s'accoupler avec lesdites première et seconde parties allongées (15) (16) des deux panneaux (10) qui sont couplés ensemble, ledit moyen de fixation (30) comprenant au moins un élément de raccordement (41) contenu à l'intérieur de ladite cavité (20) pour fixer de manière rigide lesdits deux panneaux (10) couplés ensemble ; **caractérisé en ce que** lesdits deux panneaux (10) sont couplés ensemble à travers au moins une feuille élastique (43) s'accouplant avec au moins l'une desdites première et seconde parties allongées (15) (16) correspondantes.

15. Mur selon la revendication 14, **caractérisé en ce que** chaque première/seconde partie allongée (15) (16) a une section transversale ouverte longitudinalement pour coupler une tête avec l'une desdites seconde/première parties allongées (16) (15) de l'un desdits panneaux (10) adjacents; ledit moyen de fixation (30) comprenant au moins un logement (32) pour ledit élément de raccordement élastique (41).

16. Mur selon la revendication 15, **caractérisé en ce que** chacun desdits logements (32) est obtenu dans au moins l'une desdites première et seconde parties allongées (15) (16) ; ledit moyen de fixation (30) comprenant également au moins un élément de verrouillage (40) doté d'au moins l'un desdits éléments de raccordement élastique (41).

17. Mur selon la revendication 16, **caractérisé en ce que** ladite première partie allongée (15) se terminer sur le côté de ladite seconde partie (16) avec au moins un rabat longitudinal (18) respectif ayant au moins l'un desdits logements (32) et au moins une partie d'extrémité longitudinale (19) respective; ledit élément de verrouillage (40) comprenant un couvercle (42) doté d'au moins une feuille (43) délimitée longitudinalement par une clé d'extrémité transversale (44).

18. Mur selon la revendication 17, **caractérisé en ce que** ladite clé (44) est formée d'une manière correspondant audit logement (32) respectif pour s'accoupler à celui-ci selon un raccordement par emboîtement.

19. Mur selon la revendication 18, **caractérisé en ce que** ladite clé (44) a une section transversale en dents de scie circulaire longitudinalement orientée de façon à définir un plan (45) incliné de façon à imposer pendant le montage une déformation croissante sur ladite feuille (43) qui est proportionnelle au degré d'insertion dans ladite cavité (20), jusqu'à une hauteur face audit logement (32) afin d'entraîner ensuite un accouplement par emboîtement de ladite clé (44) à l'intérieur dudit logement (32).

20. Mur selon l'une quelconque des revendications précédentes 16 à 19, **caractérisé en ce que** ledit moyen de fixation (30) comprend au moins une nervure longitudinale (34) supportée par ledit élément de verrouillage (40) pour s'accoupler avec un siège longitudinal obtenu dans au moins l'une desdites première et seconde parties allongées (15) (16) pour conférer une rigidité supplémentaire au raccordement entre lesdits panneaux (10) adjacents et par conséquent à la structure dudit mur (1).

21. Mur selon l'une quelconque des revendications précédentes 14-20, **caractérisé en ce que** chacune desdites secondes parties (16) est sensiblement en C, et comporte une concavité respective face à ladite première partie allongée (15) dudit panneau (10) correspondant couplé à celle-ci, et est délimitée transversalement par un premier et par un second bord longitudinal (60) (62) agencé de manière non symétrique par rapport audit panneau (10) correspondant pour constituer pendant l'utilisation un angle déterminé par rapport à l'un desdits panneaux adjacents, ledit angle déterminé étant adapté de telle sorte que ledit mur (1) soit autoporteur.

22. Mur selon l'une quelconque des revendications précédentes 14-21, **caractérisé en ce que** ledit moyen de fixation (30) comprend au moins un dispositif de raccordement par serrage (70) dudit premier bord (60).

23. Mur selon la revendication 22, **caractérisé en ce que** ledit dispositif de raccordement par serrage (70) comprend un élément longitudinal (39) dudit élément de verrouillage (40) et un rabat longitudinal (18) de ladite première partie (15) agencé, pendant l'utilisation, sur les côtés opposés dudit premier bord (60).

24. Mur selon la revendication 10, **caractérisé en ce que** ledit élément longitudinal (39) dudit élément de verrouillage (40) a une section transversale sensiblement en C et est agencé sur un côté opposé de ladite nervure longitudinale (34).

25. Mur selon l'une quelconque des revendications précédentes 21 à 24, **caractérisé en ce que** lesdits premier et second bords (60) (62) comportent une première et une seconde concavité (61) (63) respectives avec des étendues différentes, toutes les deux étant orientées vers la base vers l'extérieur pour s'accoupler avec le montage avec chaque rabat (18) correspondant de ladite première partie allongée (15) d'un premier panneau (10) correspondant couplé à celui-ci.

26. Mur selon la revendication 25, **caractérisé en ce que** ledit second bord (62) est formé pour contenir, pendant l'utilisation, un premier rabat (18) d'une première partie (15) à l'intérieur de ladite seconde concavité (63) respective et pour permettre à ladite première partie (15) d'être mise en rotation pendant le montage jusqu'à ce qu'un second rabat (18) puisse entrer en contact avec l'extérieur dudit premier bord (60), maintenant un contact par accouplement entre ledit second bord (62) et ledit premier (18).

27. Mur selon la revendication 26, **caractérisé en ce que** ledit premier bord (60) est adapté pour être couvert par ledit second rabat (18) qui est déformé transversalement pour achever un raccordement par emboîtement qui est longitudinalement libre entre lesdites première et seconde parties (15) (16), ledit second rabat (18) s'accouplant avec ladite première concavité (61).

28. Mur selon l'une quelconque des revendications précédentes 15 à 27, **caractérisé en ce que** chacun desdits logements (32) comprend un trou cylindrique (32).

29. Mur selon l'une quelconque des revendications précédentes 16 à 28, **caractérisé en ce que** chacun desdits éléments de verrouillage (40) comporte un siège (46) pour loger un élément déterminé (47).

30. Mur selon la revendication 29, **caractérisé en ce que** ledit élément déterminé (47) comprend un pied (48) adapté pour supporter chacun desdits panneaux (10).

31. Mur selon la revendication 29, **caractérisé en ce que** ledit élément déterminé (47) comprend un support de données (49).

32. Mur selon l'une quelconque des revendications précédentes 14 à 31, **caractérisé en ce que** chacune desdites secondes parties (16) se termine sur le côté de ladite première partie allongée (15) avec deux desdits premier et second bords longitudinaux (60) (62) opposés l'un à l'autre; lesdits premier et second bords (60) (62) étant formés transversalement de façon à permettre aux deux panneaux (10) correspondants d'être accouplés ensemble par emboîtement selon un angle déterminé pour fabriquer une pluralité de panneaux (10) autoporteurs, couplés ensemble deux par deux.

33. Mur selon l'une quelconque des revendications précédentes 14 à 32, **caractérisé en ce que** chacun desdits panneaux (10) est délimité frontalement par une surface concave (11) (12), délimitée en largeur par la première et la seconde partie allongée (15) (16) respectives pour contenir un moyen de placage (50) avec une épaisseur définissable à volonté pour donner à chacun desdits panneau (10) au moins un élément physique déterminé.

34. Mur selon la revendication 33, **caractérisé en ce que** ledit moyen de placage (50) comprend un matériau d'isolation thermique.

35. Mur selon les revendications 33 ou 34,
**caractérisé en ce que** ledit moyen de placage (50) comprend un matériau insonorisant.

36. Mur selon l'une quelconque des revendications précédentes 27 à 35, **caractérisé en ce qu'**il a une forme en plan sensiblement sinusoïdale.

37. Mur selon l'une quelconque des revendications précédentes 27 à 35, **caractérisé en ce qu'**il a une forme en plan sensiblement annulaire.

38. Procédé pour monter et installer un mur modulaire constitué selon les revendications 14 à 37 et comprenant une pluralité de panneaux (10), ledit procédé comprenant une étape de raccordement des paires adjacentes desdits panneaux (10), en accouplant d'abord un rabat (18) d'une première partie (15) dans une concavité (63) respective d'une seconde partie adjacente (16) et en faisant ensuite tourner ladite première partie allongée (15) jusqu'à ce qu'un second rabat libre (18) de celle-ci occupe une concavité (63) respective de ladite seconde partie (16), entraînant un raccordement par emboîtement longitudinalement libre pouvant rendre le mur (1) autoporteur, ledit procédé étant **caractérisé en ce qu'**il comprend le logement d'au moins un élément de raccordement (41) à l'intérieur d'une cavité (20) définie par lesdites première et seconde parties (15, 16) de telle sorte que lesdits deux panneaux soient couplés ensemble à travers au moins une feuille élastique (43) s'accouplant avec au moins l'une desdites première et seconde parties (15, 16) correspondantes.

39. Procédé pour monter et installer un mur modulaire selon la revendication 38, **caractérisé en ce que** ladite étape de raccordement des paires adjacentes desdits panneaux (10) est précédée par la phase de positionnement desdits panneaux (10) le long afin de définir une configuration en plan pour ledit mur (1) qui est adaptée aux besoins particuliers et est en même temps compatible avec ceux attribuables à la structure dudit mur (1).

40. Procédé pour monter et installer un mur modulaire selon les revendications 38 ou 39,
**caractérisé en ce que** ladite étape de raccordement desdits panneaux (10) qui sont adjacents l'un à l'autre est suivie par une étape d'insertion d'une paire d'éléments de verrouillage (40) aux extrémités supérieure et inférieure de chaque cavité (20), comprises entre lesdites première et seconde parties allongées (15) (16), au moins jusqu'à ce que l'une desdites première et seconde parties allongées (15) (16) soit accouplée, afin de raccorder longitudinalement de manière desserrable mécaniquement lesdits panneaux (10) adjacents et conférer une rigidité supplémentaire audit mur (1).

41. Procédé pour monter et installer un mur modulaire selon la revendication 40, **caractérisé en ce qu'**il comprend une étape d'association d'au moins un pied (48) adapté pour supporter lesdits panneaux (10) avec au moins l'un desdits éléments de verrouillage (40).

42. Procédé pour monter et installer un mur modulaire selon les revendications 40 ou 41, **caractérisé en ce qu'il** comprend une étape d'association d'au moins un support de données (49) avec au moins l'un desdits éléments de verrouillage (40).

43. Procédé pour monter et installer un mur modulaire selon l'une quelconque des revendications 38 à 42, **caractérisé en ce qu'**il comprend l'étape de logement d'un moyen de placage (50) d'une épaisseur définissable à volonté pour donner auxdits panneaux (10) au moins une caractéristique physique déterminée.
